# EUROPÄISCHE PATENTANMELDUNG

(11) **EP 4 410 722 A1**
(43) Veröffentlichungstag der Anmeldung: **07.08.2024**
(21) Anmeldenummer: 23161544.4
(22) Anmeldetag: 13.03.2023
(51) Int. Cl.: B65G 65/23, B07C 3/02, B64F 1/36, B25J 9/00, B65G 1/10

(54) **VERFAHREN ZUM ENTLADEN VON LADUNGSTRÄGERN UND ENTLADESYSTEM**

(30) Priorität: 31.01.2023 EP 23154289
(71) Anmelder: Siemens Logistics GmbH, 90429 Nürnberg (DE)
(72) Erfinder: MUECK, Dr. Bengt, 90429 Nürnberg (DE); SCHWINGE, Christian, 90556 Cadolzburg (DE)
(74) Vertreter: Siemens Patent Attorneys

(57) **Zusammenfassung**

Das Entladen von Stückgütern (2) aus Ladungsträgern (4) erfordert bislang speziell ausgestaltete, monofunktionale Kippvorrichtungen. Die Erfindung offenbart ein multifunktionales Entladesystem (1) und ein Verfahren zum Entladen von Ladungsträgern (4) mit den Verfahrensschritten: Aufnehmen des Ladungsträgers (4) samt Stückgut (2) durch eine Ladevorrichtung (6). Bewegen des Ladungsträgers (4) durch die Ladevorrichtung (6) hin zu einem oberhalb einer durch das Sortierkriterium bestimmten Zielposition (8) angeordneten Entladebereich (10). Neigen des Ladungsträgers (4) durch die Ladevorrichtung (6) um eine Neigungsachse (12) bis hin zu einem Neigungswinkel (14), wobei der Neigungswinkel (14) derart gewählt ist, dass das Stückgut (2) aus der Ladevorrichtung (6) hin zur Zielposition (8) gleitet. Gleiten des Stückguts (2) hin zur Zielposition (8) über eine zwischen dem Ladungsträger (4) und der Zielposition (8) und oberhalb der Zielposition (8) angeordnete Rutsche (16), wobei die Rutsche (16) in demselben oder einem ähnlichen Neigungswinkel (14) angeordnet ist. Ablegen des Ladungsträgers (4) durch die Ladevorrichtung (6). Die Erfindung ermöglicht eine hohe Flexibilität in Fördersystem-Layouts und eignet sich gut für einen Retrofit.

## Beschreibung

Die vorliegende Erfindung betrifft das technische Gebiet der Fördersysteme für mit Stückgütern beladenen Ladungsträgern, insbesondere für das Entladen der Stückgüter von diesen Ladungsträger. Insbesondere betrifft die Erfindung Flughafen-Gepäckfördersysteme in denen Gepäckstücke in Gepäckwannen transportiert werden.

Diese Anmeldung beansprucht die Priorität der europäischen Anmeldung 23 154 289.5 "Verfahren und Speichersystem zum Speichern von Ladungsträgern".

Viele Gepäckfördersysteme in Flughäfen sind als wannengestützte Gepäckförderanlagen (ICS = Individual Carrier System) ausgestaltet. Der Vorteil eines wannengestützte Basissystems ist die immer einheitliche Form der Ladungsträger (Gepäckwannen), wodurch das Förderverhalten aller Ladungsträger sehr einheitlich ist, sowie die eindeutige, automatisierte und nahezu 100%ige Gepäckidentifizierung mittels RFID an den (Gepäck-)Wannen. Zudem verhindern die Ladungsträger das Einklemmen loser Teile der Gepäckstücke in der Gepäckförderanlage und der Transport ist gutschonend. Ein weiterer Vorteil von Wannen ist der einfache Zugriff zum Be- und Entladen, die höhere erzielbare Fördergeschwindigkeit, die Einheitlichkeit (die eine standardisierte und somit unkompliziertere Ausfertigung der Komponenten erlaubt, wobei die Komponenten nur für die einheitlichen Ladungsträger und nicht für eine hohe Variation unterschiedlicher Stückgüter ausgestaltet werden müssen). Auch in anderen Bereichen der Logistik kommen wannengestützte Förderanlagen zum Einsatz, in denen Stückgüter in Ladungsträgern transportiert und zwischengespeichert werden. Die Gepäckwannen werden samt Gepäckstück gemäß ihrem Sortierkriterium abgefertigt und zu ihrem endgültigen Bestimmungsort in der Gepäckwanne transportiert. Diese endgültigen Bestimmungsorte sind typischerweise Gepäckkarussells beim Baggage-Claim oder Bandförderer vor der Verladung in Flugzeuge. In den meisten Fällen werden die Gepäckstücke an diesen Ausgangsorten manuell abgeholt. In diesen Fällen werden die Gepäckstücke von der Gepäckwanne auf ein Bandsystem entladen. Das Entladen von Gepäckstücken aus einer Gepäckwanne erfolgt typischerweise durch Kippen bzw. Drehen eines des Förderers, hierfür sind mehrere Varianten einer Kippvorrichtung bekannt. Jeder dieser Varianten benötigt Platz und Verbindungsinfrastruktur zum Rest des Fördersystems, ist somit für jede Kippposition mit Aufwand bei Installation und im Betrieb verbunden.

Zudem müssen einige Gepäckstücke in einem Frühgepäckspeicher (Early Baggage Storage, EBS) aufbewahrt werden. Eine übliche Lösung dafür ist es, Gepäckwanne samt Gepäckstück in einem festen Regal innerhalb eines Lagers zu lagern. Die Gepäckwannen werden mit spezialisierten Transportmaschinen (z. B. Regalbediengerät) in und aus dem Regal bewegt. In einer Weiterentwicklung (wie in der EP23154289.5 beschrieben) werden die Gepäckwannen samt Gepäckstück von einem Roboter (Ladevorrichtung) vom Transportsystem aufgenommen und in ein Regalfach abgelegt. Die Regale können von einem fahrerlosen Transportfahrzeug (Automated Guided Vehicle, AGV) an einen Speicherort gebracht. Immer wenn ein Gepäckstück aus dem Frühgepäckspeicher entnommen werden muss, fährt ein AGV das Regal zurück zum Roboter und dieser lädt die Gepäckwanne samt Gepäckstück wieder auf das Fördersystem.

Um ein Gepäckstück von einem Frühgepäckspeicher an einen endgültigen Bestimmungsort im Fördersystem zu transportieren, ist der Transport des Regals zum Roboter, die Bewegung des Gepäckwanne samt Gepäckstück (Endsortierung) und der Einsatz eines Kippmechanismus erforderlich. Diese Kippmechanismen befinden sich typischerweise außerhalb der Haupttransportstrecke. So sind neben dem reinen Kippmechanismus noch eine Umleitung, Stauförderer und eine Zusammenführung erforderlich. Auch der direkte Zugriff auf Gepäckstücke für andere Anwendungen erfolgt auf die beschriebene Weise.

Bislang werden (Zwischen-)Lagerung im Frühgepäckspeicher und Endsortierung als getrennte Prozesse abgewickelt, die jeweils verschiedene, meist monofunktionale Vorrichtungen erfordern: Gepäckstücke werden von einem Frühgepäckspeicher in das wannengestützte Sortiersystem versandt und dort entladen, wo sie gebraucht werden. Hierzu werden Gepäckwannen mit Varianten spezialisierter Kippmaschinen gekippt. Und das Ein- und Ausladen von Gepäckwannen erfolgt mit speziellen Regalbediengeräten.

Der vorliegenden Erfindung liegt daher die Aufgabe zugrunde, eine Lösung zum Entladen von Ladungsträgern bereitzustellen, die sowohl flexibel als auch unkompliziert in Bezug auf Aufbau und Betrieb ist. Diese Aufgabe wird durch die in den unabhängigen Ansprüchen beschriebenen Lösungen gelöst.

Die Erfindung ist nicht auf Flughafen-Gepäckfördersysteme beschränkt sondern eignet sich für sämtliche Fördersysteme, in denen Stückgüter in nach oben offenen Ladungsträgern befördert werden.

Die erfindungsgemäße Lösung sieht ein Verfahren zum Entladen von mit Stückgütern beladenen einheitlichen Ladungsträgern, insbesondere von mit Gepäckstücken beladenen Gepäckwannen, vor, wobei die Stückgüter ein zugordnetes Sortierkriterium aufweisen, die Ladungsträger eindeutig identifizierbar und mit einem Sortierkriterium assoziierbar sind. Das Verfahren weist die Verfahrensschritte auf:
a) Aufnehmen des Ladungsträgers samt Stückgut durch eine Ladevorrichtung.
b) Bewegen des Ladungsträgers durch die Ladevorrichtung hin zu einem oberhalb einer durch das Sortierkriterium bestimmten Zielposition angeordneten Entladebereich.
c) Neigen des Ladungsträgers durch die Ladevorrichtung um eine Neigungsachse bis hin zu einem Neigungswinkel, wobei der Neigungswinkel derart gewählt ist, dass das Stückgut aus der Ladevorrichtung hin zur Zielposition gleitet.
d) Gleiten des Stückguts hin zur Zielposition über eine zwischen dem Ladungsträger und der Zielposition und oberhalb der Zielposition angeordnete Rutsche, wobei die Rutsche in demselben oder einem ähnlichen Neigungswinkel angeordnet ist.
e) Ablegen des Ladungsträgers durch die Ladevorrichtung.

Hinsichtlich einer Vorrichtung wird die vorstehend genannte Aufgabe gelöst durch ein Entladesystem zum Entladen von mit Stückgütern beladenen einheitlichen Ladungsträgern, insbesondere von mit Gepäckstücken beladenen Gepäckwannen, umfassend eine Ladevorrichtung und eine Rutsche. Die Stückgüter weisen ein zugordnetes Sortierkriterium auf, die Ladungsträger sind eindeutig identifizierbar und mit einem Sortierkriterium assoziierbar. Die Ladevorrichtung ist ausgestaltet zum Aufnehmen und Ablegen des Ladungsträgers mit und ohne Stückgut. Die Ladevorrichtung ist ausgestaltet zum Bewegen des Ladungsträgers durch die Ladevorrichtung hin zu einem oberhalb einer durch das Sortierkriterium bestimmten Zielposition angeordneten Entladebereich. Die Ladevorrichtung ist ausgestaltet zum Neigen des durch die Ladevorrichtung gehaltenen Ladungsträgers um eine Neigungsachse bis hin zu einem Neigungswinkel, wobei der Neigungswinkel derart gewählt ist, dass das Stückgut aus der Ladevorrichtung hin zur Zielposition gleitet. Die Rutsche ist in demselben oder einem ähnlichen Neigungswinkel angeordnet zwischen dem Ladungsträger und der Zielposition und oberhalb der Zielposition angeordnet und weist eine Rutschoberfläche auf, die zum Gleiten des Stückguts hin zur Zielposition ausgestaltet ist.

So können sich die folgenden Vorteile zusätzlich ergeben: Die Ladungsträger dienen als Behältnis das von einem entsprechenden Werkzeug der Ladevorrichtung (Roboter o.ä.) bewegt wird. Systeme mit Ladungsträgern sorgen für Einheitlichkeit in der Gepäckförderung, erlauben einen zuverlässigeren Betrieb, höhere Geschwindigkeiten und besseren Durchsatz. Da alle Gepäckstücke während der gesamten Gepäckbeförderung vollständig in ihren Ladungsträgern verbleiben, ist das Risiko von beschädigten Gepäckstücken und Systemstörungen (z.B. verursacht durch eingeklemmte Träger o.ä.) gering.

Unter einem Ladungsträger im Sinne der Erfindung soll insbesondere eine Wanne, noch insbesonderer eine Gepäckwanne, verstanden werden, die typischerweise einen Zugriff von oben und dadurch unkompliziertes Be- und Entladen erlaubt. Die Stückgüter sind mit einem Identifikator, bei Gepäckstücken typischerweise einem Gepäckanhänger, versehen. Bei Gepäckstücken ist das Sortierkriterium typischerweise der Flug, es kann jedoch auch die Abfertigungszeit oder ein anderes Kriterium (z.B. zusammenreisende Passagiere) herangezogen werden. Die Reichweite der Ladevorrichtung ist abhängig von der Reichweite eines Roboterarms der Ladevorrichtung. Der Ladungsträger kann durch Neigen entladen werden, dies bedingt keine oder nur eine geringe seitliche Begrenzung des Ladungsträgers. Bei einem Gleiten des Stückguts stimmt die Auflagefläche vor dem Entladen auf dem Ladungsträger und nach dem Entladen auf der Zielposition überein. Dies ist gutschonender als ein Drehen oder unkontrolliertes (Aus-)Kippen des Stückguts, welches bei sehr hohem Neigungswinkel des Ladungsträgers erreicht wird. Der Neigungswinkel schließt die Horizontale und die Auflagefläche des Ladungsträgers ein. Es ist sinnvoll, als Neigungswinkel denjenigen Winkel festzulegen, bei der der Großteil aller Stückgüter, mit welchen der Ladungsträger beladen ist, gleitet. Bei zu geringem Neigungswinkel ist die Haftreibung noch nicht überwunden, so dass das Gleiten des Stückguts aus dem Ladungsträger noch nicht initiiert wird. Die Wahl eines größeren Neigungswinkels ist weniger gutschonend. Gemäß einer Ausführungsform kann der Neigungswinkel der Rutsche dynamisch an den Neigungswinkel des Ladungsträgers angepasst werden.

Der Rutsch-Neigungswinkel entspricht in etwa dem Ladungsträger-Neigungswinkel oder ist vorzugsweise leicht geringer, damit keine unnötig starke weitere, nicht gutschonende Beschleunigung auftritt. Da das Stückgut bei Kontakt mit der Rutsche schon in Bewegung ist, kann auch ein Rutsch-Neigungswinkel, der geringer als der Ladungsträger-Neigungswinkel ist, ausreichen. Gemäss einer Ausführungsform kann der Rutsch-Neigungswinkel auch grösser als der Ladungsträger-Neigungswinkel, insbesondere wenn der Ladungsträger-Neigungswinkel dynamisch eingestellt wird (neigen so lange bis das Stückgut rutscht) und der Rutsch-Neigungswinkel hingegen fest eingestellt wurde.

Die Rutsche dient mehreren Zielen: sie ermöglicht das kontinuierliche Gleiten des Stückguts zwischen dem Ladungsträger und der Zielposition. Bei einer bewegten Zielposition auf einem Förderer würden bei einem direkten Entladen ohne Rutsche durch das bereits weggeförderte, aber noch in Kontakt mit dem Ladungsträger stehende Stückgut gleichzeitig Kräfte wirken auf das Stückgut und übertragen auf die Ladevorrichtung, welches noch in Kontakt mit der Ladevorrichtung ist. Die Ladevorrichtung müsste stabiler ausgestaltet werden und es könnte zu Beschädigungen des Gutes kommen. Um dies zu vermeiden, müsste ohne Rutsche der Förderer angehalten werden mit entsprechender Umsatzverringerung.

Der Ladungsträger kann von einem Förderer oder von einer unbewegten Aufnahmeposition, beispielsweise aus einem Regalfach, aufgenommen werden.

Das Entladesystem weist, soweit übertragbar, die gleichen Vorteile auf, welche bezüglich des vorgestellten Verfahrens aufgeführt sind. Die in den Unteransprüchen aufgeführten Ausgestaltungen sind jeweils einzeln und in beliebiger geeigneter Kombination mit dem erfindungsgemäßen Verfahren und dem erfindungsgemäßen Entladesystem kombinierbar. So sind Verfahrensmerkmale auch als Eigenschaft der entsprechenden Vorrichtungseinheit gegenständlich formuliert zu sehen und umgekehrt. Auf diese Ausgestaltungsformen und die mit ihnen verbundenen Vorteile wird im Folgenden eingegangen.

Um ein Gleiten des Stückguts aus der Ladevorrichtung auch bei geringem Neigungswinkel zu initiieren, kann gemäß einer Ausführungsform ein Bewegen, insbesondere ein abruptes Bewegen, des Ladungsträgers durch die Ladevorrichtung mit einer Bewegungskomponente entgegen der Rutschrichtung erfolgen. Durch die Ausnutzung der Trägheit des Stückguts muss der Neigungswinkel nicht erhöht werden, um das Gleiten zu initiieren. Ein größerer Neigungswinkel würde ansonsten das Stückgut stärker beschleunigen und wäre weniger gutschonend. Somit kann gemäß einer Ausführungsform die Ladevorrichtung ausgestaltet sein zum Bewegen, insbesondere zum abrupten Bewegen, des Ladungsträgers mit einer Bewegungskomponente entgegen der Rutschrichtung.

Gemäß einer weiteren Ausführungsform kann ein Rütteln des Ladungsträgers durch die Ladevorrichtung erfolgen, um ein Gleiten des Stückguts aus der Ladevorrichtung zu initiieren. Hierzu kann die Ladevorrichtung ausgestaltet sein zum Rütteln des Ladungsträgers.

Gemäß einer Ausführungsform kann sich die Zielposition auf einem Förderer befinden, wobei der Förderer das Stückgut mit einer Bewegungskomponente quer zur Rutschrichtung transportieren und hierzu ausgestaltet sein kann.

Um eine gute Ausnutzung des Entladebereichs zu erreichen, kann gemäß einer Ausführungsform ein Bewegen der gesamten und/oder nur eines Teils der Ladevorrichtung entlang dem Förderer erfolgen, während ein Gleiten des Stückguts aus dem Ladungsträger initiiert wird, wobei hierzu die gesamte und/oder nur ein Teil der Ladevorrichtung ausgestaltet sein kann. Da die Entladeposition durch Förderer den bewegt ist, kann die Entladeposition so genauer getroffen werden und Rutschen des Stückguts entlang dem Förderer beim Auftreffen auf den Förderer aufgrund seiner Trägheit wird verringert.

Gemäß einer weiteren Ausführungsform kann ein Detektieren einer Position eines weiteren Gegenstandes, insbesondere eines weiteren Stückguts, auf dem Förderer und ein Auswählen der Zielposition in Abhängigkeit von der detektierten Position erfolgen. Hierzu kann das Entladesystem eine Detektionseinheit ausgestaltet ist zum Detektieren der Position und eine Steuerung ausgestaltet zum Auswählen der Zielposition umfassen. Auf diese Weise kann sowohl eine Kollision des Stückguts mit weiteren Gegenständen vermieden als auch ein Abstand zu diesen weiteren Gegenständen eingestellt werden.

Gemäß einer weiteren Ausführungsform kann zudem erfolgen ein Aufnehmen eines weiteren Ladungsträgers samt Stückgut durch die Ladevorrichtung in einem Entladebereich und ein Ablegen des Ladungsträgers samt Stückgut durch die Ladevorrichtung in einem Ablagebereich, wobei der Ablagebereich mit dem Entladebereich übereinstimmen kann aber nicht muss. Hierzu kann die Ladevorrichtung ausgestaltet sein zum Ablegen des Ladungsträgers samt Stückgut an eine Ablageposition in einem Ablagebereich, wobei der Ablagebereich mit dem Entladebereich übereinstimmen kann aber nicht muss. Dies erlaubt eine Multifunktionalität sowohl zum Entladen der Stückgüter vom Ladungsträger als auch zum Umpositionieren beladener Ladungsträger, so dass mit derselben Ladevorrichtung als Funktionseinheit neue Layoutkonfigurationen des Fördersystems möglich sind. In dem Ablagebereich können sich gemäß einer Ausführungsform mehrere Ablagepositionen befinden.

Gemäß einer weiteren Ausführungsform kann die Ablageposition ein Regalfach eines Regal sein, wobei das Regal durch ein fahrerloses Transportfahrzeug aus dem Ablagebereich in einen Speicherbereich verschiebbar sein kann. Die Regale können als Speicher herangezogen werden, ein- und dieselbe Ladevorrichtung agiert als Regalbediengerät und zum Entladen der Ladevorrichtung. Diese Ausführungsform ermöglicht die Kombination eines flexiblen Zwischenspeichers (Frühgepäckspeichers) mit einer eine Entladefunktionalität erfordernden Endstelle des Fördersystems (z.B. Gepäckausgabekarussell oder Verladestelle) .

Gemäß einer weiteren Ausführungsform kann die Ladevorrichtung den Ladungsträger langsam neigen, wobei kontinuierlich oder inkrementell vor Erreichen eines maximal festgelegten Neigungswinkels jeweils eine weitere Bewegung des Ladungsträgers (Wegziehen oder Rütteln) erfolgen kann, um das Gleiten des Stückguts aus dem Ladungsträger heraus zu initiieren. Auf diese Weise wird nur so viel gekippt wie notwendig, das Entladen ist so besonders gutschonend.

Gemäß einer bevorzugten Ausführungsform kann die Ladevorrichtung als Mehrgelenkroboter ausgestaltet sein, wodurch eine besonders hohe Flexibilität erzielt werden kann. Zudem können Teile des Roboterarms auch teleskopartig verlänger- bzw. verkürzbare Komponenten aufweisen, so können abrupte Bewegungen besonders einfach ausgeführt werden.

Ausführungsformen der Erfindung werden nachfolgend anhand der Figuren beispielsweise näher erläutert. Dabei zeigen:
- Figuren 1, 3, 4: Entladevorgänge eines Stückguts von einem Ladungsträger eines erfindungsgemäßen Entladesystems mit einer Ladevorrichtung;
- Figur 2: einen Beladevorgang mit derselben Ladevorrichtung;
- Figur 5: ein Fördersystem mit einer erfindungsgemäßen Ladevorrichtung, die sowohl beladene Ladungsträger repositioniert als auch Stückgüter von Ladungsträgern entlädt.

Die nachfolgend beschriebenen Ausführungsformen von Vorrichtung und Verfahren beziehen sich exemplarisch auf ein Entladesystem 1 in einem Flughafen, alle Ausführungsformen sind jedoch auch für andere Arten von Entladesystemen 1 in der Logistik anwendbar. So können in jeder der nachfolgenden Ausführungsformen die Begriffe Gepäckstückstück 2 und Gepäckwanne 4 durch das allgemeinere Stückgut 2 und Ladungsträger 4 / Wanne 4 ersetzt werden. Die Fördersysteme sind als wannengestützte Gepäckförderanlagen ausgestaltet, bei denen die Gepäckstücke 2 in der gesamten Gepäckförderanlage in Gepäckwannen 4, die als Ladungsträger 4 agieren, transportiert werden. Nach dem Entladen können die Gepäckstücke 2 auch ohne Gepäckwannen 4 transportiert werden, der Frühgepäckspeicher 30 als Speichersystem 30 für Frühgepäck hingegen ist wannengestützt. Die Wanne 4 dient als vereinheitlichtes Behältnis, das von einem entsprechenden Werkzeug an der Ladevorrichtung 8 bewegt wird. Aufgrund der einfach zukaufbaren, nicht voneinander abhängenden Komponenten (Ladevorrichtung 6, Ladungsträger 4, Rutsche 16) kann das Entladesystem 1 unkompliziert erweitert werden, wodurch auch die anfänglichen Investitionskosten gering sind.

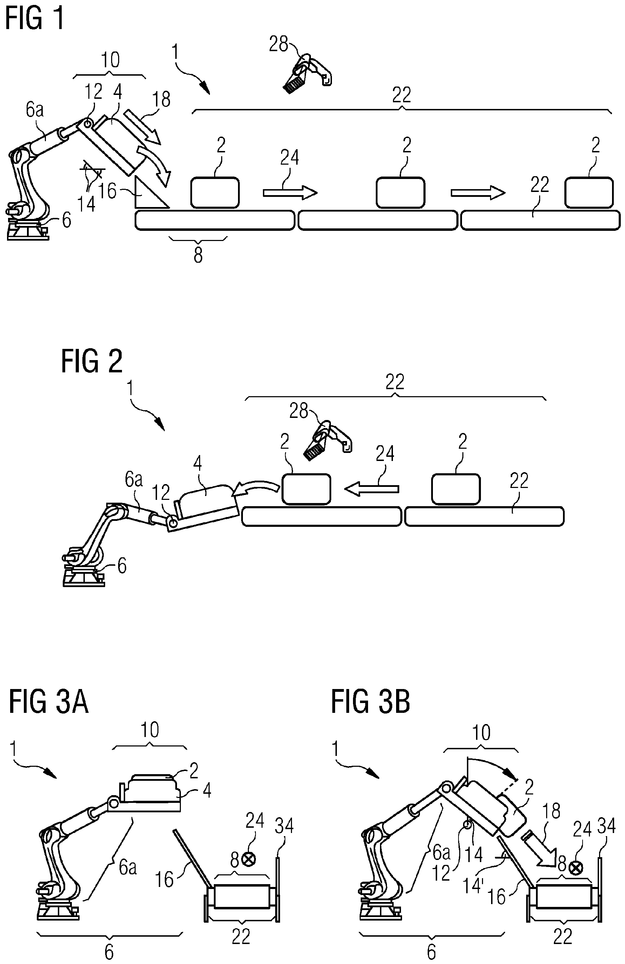

Figur 1 zeigt ein Entladesystem 1 gemäß einer Ausführungsform der Erfindung. Zunächst wurde eine Gepäckwanne (Ladungsträger) 4 samt Gepäckstück (Stückgut) 2 von der Ladevorrichtung 6 aufgenommen, hierzu umfasst die Ladevorrichtung 6 eine Greifvorrichtung oder eine anderweitig ausgestaltete Aufnahmevorrichtung. Für das Aufnehmen muss sich der Ladungsträger 6 nur im Greifbereich der Ladevorrichtung 6 befinden, es ist nicht notwendig, den Ladungsträger 4 manuell in die Ladevorrichtung einzuführen. Der Ladungsträger 4 kann von einem bewegten Förderer 22 oder von der anderen Stelle, z.B. aus einem Regalfach, aufgenommen werden. Anschließend wurde der Ladungsträger 4 vom Arm 6a der Ladevorrichtung 6 in einen oberhalb einer Rutsche 16 und einer Zielposition 8 angeordneten Entladebereich 10 positioniert.

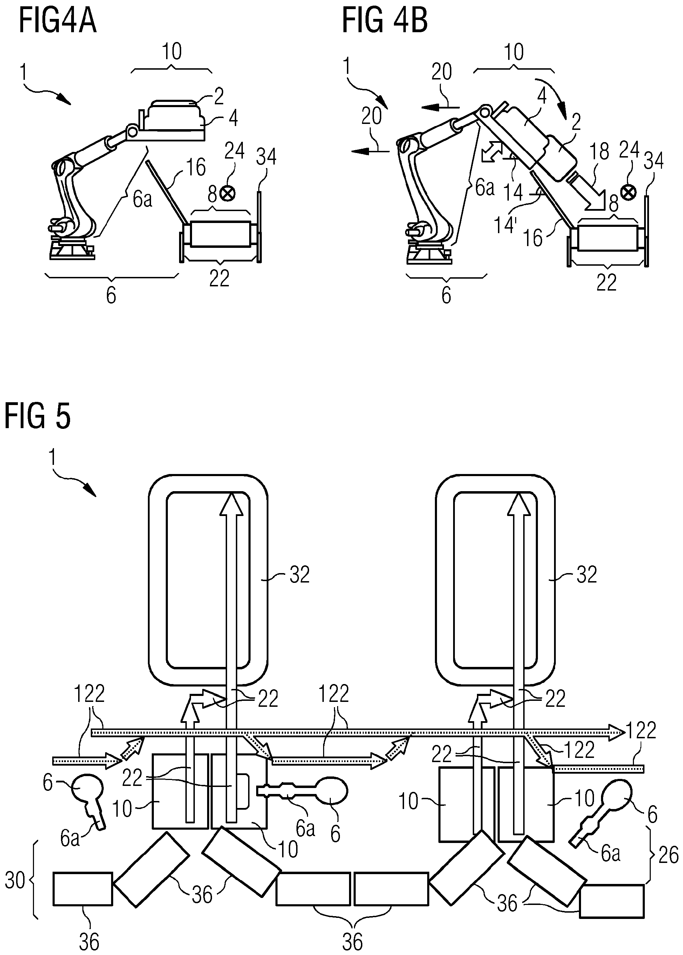

Das Gepäckstück 2 wird von der Ladevorrichtung 6 entladen, während die Ladevorrichtung 6 die Gepäckwanne 4 hält, wobei das Entladen des Gepäckstücks 2 auf den bzw. von dem Förderer 22 in der Ausführungsform von Figur 1 auf einen Anfang des Förderers 6 erfolgt (Zielposition 8 der Entladung des Gepäckstück 2). Somit ist keine seitliche Begrenzung 34 wie in den Ausführungsformen der Figuren 3 und 4 erforderlich, da eine Bewegungskomponente der Rutschrichtung 18 mit der Förderrichtung 24 des Förderers übereinstimmt und somit keine Gefahr eines unkontrollierten Rutschens des Gepäckstücks 2 über den Rand des Förderers 22 besteht. Die Ladevorrichtung 6 neigt die Gepäckwanne 4 um eine Neigungsachse 12 herum bis hin zu einem Neigungswinkel 14, so dass das Gepäckstück 2 über eine Rutsche 16 auf den Förderer 22 gleitet. In der Ausführungsform von Figur 1 stimmen Rutsch-Neigungswinkel 14 und Ladungsträger-Neigungswinkel 14' überein, dies ist jedoch nicht zwingend. Nach dem Entladen des Gepäckstücks 2 legt die Ladevorrichtung 6 die leere Gepäckwanne 4 ab. Um das Gepäckstück 2 nach dem Entladen gemäß seinem Sortierkriterium zu behandeln, wird vor dem Entladen das Sortierkriterium bestimmt.

Figur 2 zeigt, wie mit derselben Ladevorrichtung 6 ein Gepäckstück 2 von einem Förderer 22 auf eine Gepäckwanne 4 geladen werden kann. Für das Beladen wird die von der Ladevorrichtung 6 gehaltene Gepäckwanne 4 direkt an den Förderer 22, evtl. leicht unterhalb platziert und das zu ladende Gepäckstück 2 in die Gepäckwanne 4 gefördert. Vor der erneuten Aufnahme eines weiteren Gepäckstücks 2 von dem Förderer 22 nimmt die Ladevorrichtung 8 eine weiter Gepäckwanne 4 auf.

Bei der Ent- und Beladung gemäß den Figuren 1 und 2 können die zu- und abführenden Förderer 22 auch direkt übereinander (mit genügend Platz dazwischen für die zu transportierenden Gepäckstücke 4a) oder anderweitig in unmittelbarer Nähe innerhalb des für die Ladevorrichtung 6 zu erreichenden Entladebereichs 10 angeordnet sein, so dass ein- und dieselbe Ladevorrichtung 8 für das Be- und Entladen verwendet werden kann. Zum Überwachen des Be- und Entladens kann gemäß einer weiteren Ausführung eine von dem Entladesystem 1 umfasste Detektionseinheit 28 herangezogen werden, die bei entsprechender Ausgestaltung zudem auch zum Erfassen des Sortierkriteriums herangezogen werden kann.

Figur 3 zeigt das Entladen gemäß noch einer weiteren Ausführungsform der Erfindung, wobei diese ähnlich wie die in Figur 1 gezeigte Ausführung ist. Der Rutsch-Neigungswinkel 14' ist jedoch grösser als der Ladevorrichtungs-Neigungswinkel 14. Das Entladen erfordert ein Rutschen des Gepäckstücks 2 durch das Schrägstellen der von der Ladevorrichtung 6 gehaltenen Gepäckwanne 4. Es ist möglich für jede Entladung einen vorbestimmten Neigungswinkel 14 zu wählen, die Wahl des Neigungswinkels 14 erfolgt somit unabhängig von Haftung und Haftung des jeweils spezifisch zu entladenden Gepäckstücks 2. Alternativ kann die Gepäckwanne 4 auch nur behutsam (kontinuierlich oder sequenziell) so lange und weit geneigt werden, bis das Gepäckstück 2 zu rutschen beginnt.

Zusätzlich zu einer einfachen Drehung zum Entladen des Gepäckstücks 2 wie bei einem herkömmlichen Kipper (Tilter) können Roboter-Ladevorrichtungen 6 Bewegungen ausführen, die herkömmliche Filter nicht ausführen können. Dadurch kann der Kippvorgang verbessert werden. Figur 4 zeigt gemäß einer Ausführungsform der Erfindung kombinierbare oder einzeln durchführbare Möglichkeiten eines zusätzlichen Initiierens des Rutschens bei bereits eingestelltem Neigungswinkel 14 wie in Figur 3. Einerseits kann die Trägheit des Gepäckstücks 2 ausgenutzt werden, indem die Ladevorrichtung 6 den Ladungsträger 4 abrupt mit einer Bewegungskomponente 20 entgegen der Rutschrichtung 18 wegzieht. Die Gepäckwanne 4 wird also nicht nur um eine Achse 12 gekippt/ geneigt. Parallel dazu bewegt sich der Arm 6a oder die gesamte Ladevorrichtung 6 von dem Gepäckstück 2 weg. Mit dieser abrupten Bewegung erhält das Gepäckstück 2 eine zusätzliche Beschleunigung, um die Gepäckwanne 4 zu verlassen. Im Vergleich zu einem traditionellen Kipper wird die Anzahl nicht entladener Gepäckstücke 2 ebenso wie der Platzbedarf reduziert.

Zudem zum Neigen/Kippen kann der Ladungsträger 4 auch zusätzlich gerüttelt werden (Doppelpfeil in Figur 4b) um Haftreibung zu überwinden. Besonders klebrig Gepäckstücke 2, z.B. wie nasse Lederkoffer 2, neigen ansonsten dazu, in der Gepäckwanne 4 zu bleiben. Das Rütteln reduziert ebenso die Anzahl nicht korrekt entladener Gepäckstücke 2.

In den Figuren 3 und 4 befindet sich die Zielposition 8 des Entladens auf einem Förderer 22, der mit einer Transportrichtung 24 quer zur Rutschrichtung 18 angetrieben wird. Die Rutsche 16 stellt sicher, dass das Gepäckstück 2 nicht schon bereits vom Förderer 22 entlang der Transportrichtung 24 gefördert wird, während das Gepäckstück 2 noch in Kontakt mit dem Ladungsträger 4 und somit der Ladevorrichtung 6 ist. So treten nicht gleichzeitig Krafteinwirkungen von mehreren Seiten auf den Arm 6 der Ladevorrichtung 4 auf. Seitlich der Zielposition 8 ist zudem ein Seitenschutz 34 angeordnet, der ein Herunterfallen des Gepäckstücks 2 vom Förderer 22 verhindert.

EP23154289.5 offenbart einen Frühgepäckspeicher mit roboterbeladenen Regalen. Mit Gepäckstücken 2 beladene Gepäckwannen 4 werden im Frühgepäckspeicher in horizontaler Position transportiert. Die Roboter-Ladevorrichtung 2 kann mehrere Ablagepositionen in einem Ablagebereich 26 für Gepäckwannen 4 erreichen. Gemäss einer Ausführungsform wird ein Teil des Ablagebereichs 26 in einen Entladebereich 10 geändert. Die Ladevorrichtung 2 nimmt die Gepäckwanne 4 aus dem Regal 36 oder vom Förderband 122 und bewegt es weiter in den Entladebereich. Die Ladevorrichtung 2 führt dann eine Kippbewegung mit der Gepäckwanne 4 aus, woraufhin das Gepäckstück 2 aus der Gepäckwanne 4 gleitet. Das erfindungsgemässe Entladen und Entladesystem 1 ist nicht darauf beschränkt, in Verbindung mit einem Frühgepäckspeicher 30 verwendet zu werden. Überall dort, wo der Roboter volle Gepäckwannen 4 aufnehmen und leere Gepäckwannen 4 abstellen kann, kann das erfindungsgemässe Entladen genutzt werden.

Sowohl für die zusätzlichen Bewegungen der Ladevorrichtung 2 wie in Figur 4b gezeigt, als auch zum Mitbewegen der Gepäckwanne 4 ist eine Ausgestaltung der Ladevorrichtung 2 als Mehrgelenkroboter vorteilhaft. Indem können Teile des Roboterarms auch teleskopartig verlänger- bzw. verkürzbare Komponenten aufweisen, können abrupte Bewegungen ebenso wie mitbewegende Bewegungen (oberhalb der Zielposition eines sich bewegenden Förderers 22) besonders einfach ausgeführt werden.

Figur 5 zeigt eine durch die Erfindung ermöglichte Layoutkonfiguration eines Flughafen-Gepäckfördersystems gemäß noch einer weiteren Ausführungsform. Auf einem Förderer 122 werden mit Gepäckstücken 2 beladene Gepäckwannen 4 hin zu Roboter-Entladebereichen 10 jeweils einer Ladevorrichtung 6 transportiert. In Abhängigkeit von ihren Sortierkriterien werden die Gepäckstücke 2 entweder auf einen weiteren Förderer 22 entladen, wobei dieser die entladenen Gepäckstücke 2 hin zu einer Endstelle des Gepäckfördersystems, beispielsweise ein Gepäckausgabekarussell 32, transportiert. Die Ladevorrichtung 6 kann jedoch auch einen Ladungsträger 4 samt Gepäckstück 2 in einem Ablagebereich 26 ablegen. In dem Ablagebereich 26 sind Regale 36 oder andere Speichervorrichtungen 36 angeordnet, auf die die Ladungsträger 4 samt Gepäckstücken 2 abgelegt werden und zu einem späteren Zeitpunkt entweder wieder auf den Förderer 122 und somit in die Sortierung des Gepäckfördersystems eingebracht werden können, oder ein Ladungsträger 4 samt Gepäckstück 2 wird zu späterer Zeit von der Ladevorrichtung 6 aus dem Ablagebereich 26 entnommen und anschließend direkt wird das Gepäckstück aus der Gepäckwanne 4 von der Ladevorrichtung 6 auf den Förderer 22 hin zur Endstelle 32 entladen. Für die Zwischenspeicherung können die Regale wie in der EP23154289.5 beschrieben von fahrerlosen Transportfahrzeugen in einem Speicherbereich untergebracht werden.

Gemäß einer weiteren Ausführungsform wird die gesamte und/oder nur ein Teil der Ladevorrichtung 6, z.B. der Roboterarm 6a, entlang dem Förderer 22 bewegt, während die Ladevorrichtung 6 die Gepäckwanne 4 kippt. Hierzu kann die Ladevorrichtung 6 z.B. auf Schienen neben dem Förderer 22 geführt werden. So kann die Zielposition 8 genauer getroffen werden, insbesondere wichtig bei einem sequenziellen Einstellen des Neigungswinkels 14.

Gemäß einer weiteren Ausführungsform werden die Positionen weiterer Gegenstände 2', insbesondere weiterer Gepäckstücke 2 auf dem Förderer 22 von einer Detektionseinheit 28 erfasst und die Zielposition 8 des zu entladenden Gepäckstücks 2 in Abhängigkeit von der Position der bereits auf dem Förderer 22 aufliegenden Gegenstände 2' bestimmt, beispielsweise durch Wahl des Entladezeitpunkts oder durch Positionieren der zu entladenden Gepäckwanne 4 oberhalb des Förderers 22.

Um einzelne Gepäckstücke 2 manuell zu entnehmen, ist neben dem Entladen auf ein Transportband 22 ist auch das Entladen in eine Kiste o.ä. möglich.

### Bezugszeichenliste

- 1: Entladesystem
- 2: Stückgut, Gepäckstück
- 4: Ladungsträger, Gepäckwanne
- 6: Ladevorrichtung
- 6a: Roboterarm
- 8: Zielposition
- 10: Entladebereich
- 12: Neigungsachse
- 14: Neigungswinkel
- 16: Rutsche
- 18: Rutschrichtung
- 20: Bewegungskomponente entgegen der Rutschrichtung
- 22, 122: Förderer
- 24: Förderrichtung
- 26: Ablagebereich für Ladungsträger + Stückgut
- 28: Detektionseinheit
- 30: Speicherbereich, Frühgepäckspeicher
- 32: Gepäckausgabekarussell, Stückgüter-Endstelle
- 34: Seitenschutz
- 36: Regal

## Patentansprüche

1. Verfahren zum Entladen von mit Stückgütern (2) beladenen einheitlichen Ladungsträgern (4), insbesondere von mit Gepäckstücken (2) beladenen Gepäckwannen (4), wobei die Stückgüter (2) ein zugordnetes Sortierkriterium aufweisen, die Ladungsträger (4) eindeutig identifizierbar und mit einem Sortierkriterium assoziierbar sind, aufweisend die Verfahrensschritte:
a) Aufnehmen des Ladungsträgers (4) samt Stückgut (2) durch eine Ladevorrichtung (6);
b) Bewegen des Ladungsträgers (4) durch die Ladevorrichtung (6) hin zu einem oberhalb einer durch das Sortierkriterium bestimmten Zielposition (8) angeordneten Entladebereich (10);
c) Neigen des Ladungsträgers (4) durch die Ladevorrichtung (6) um eine Neigungsachse (12) bis hin zu einem Neigungswinkel (14), wobei der Neigungswinkel (14) derart gewählt ist, dass das Stückgut (2) aus der Ladevorrichtung (6) hin zur Zielposition (8) gleitet;
d) Gleiten des Stückguts (2) hin zur Zielposition (8) über eine zwischen dem Ladungsträger (4) und der Zielposition (8) und oberhalb der Zielposition (8) angeordnete Rutsche (16), wobei die Rutsche (16) in demselben oder einem ähnlichen Neigungswinkel (14) angeordnet ist;
e) Ablegen des Ladungsträgers (4) durch die Ladevorrichtung (6) .

2. Verfahren nach Anspruch 1, zudem umfassend den Verfahrensschritt
Bewegen, insbesondere abruptes Bewegen, des Ladungsträgers (4) durch die Ladevorrichtung (6) mit einer Bewegungskomponente (20) entgegen der Rutschrichtung (18).

3. Verfahren nach einem der vorangehenden Ansprüche, zudem umfassend den Verfahrensschritt
Rütteln des Ladungsträgers (4) durch die Ladevorrichtung (6), um ein Gleiten des Stückguts (2) aus der Ladevorrichtung (6) zu initiieren.

4. Verfahren nach einem der vorangehenden Ansprüche, **dadurch gekennzeichnet, dass**
sich die Zielposition (8) auf einem Förderer (22) befindet, wobei der Förderer (22) das Stückgut (2) mit einer Bewegungskomponente (24) quer zur Rutschrichtung (18) transportiert.

5. Verfahren nach Anspruch 4, zudem umfassend den Verfahrensschritt
Bewegen der gesamten und/oder nur eines Teils der Ladevorrichtung (6) entlang dem Förderer (22), während ein Gleiten des Stückguts (2) aus dem Ladungsträger (4) initiiert wird.

6. Verfahren nach Anspruch 5, zudem umfassend die Verfahrensschritte
- Detektieren einer Position eines weiteren Gegenstandes (2`), insbesondere eines weiteren Stückguts (2), auf dem Förderer (22);
- Auswählen der Zielposition (8) in Abhängigkeit von der detektierten Position.

7. Verfahren nach einem der vorangehenden Ansprüche, zudem umfassend die Verfahrensschritte
- Aufnehmen eines weiteren Ladungsträgers (4) samt Stückgut (2) durch die Ladevorrichtung (6) in einem Entladebereich (10) ;
- Ablegen des Ladungsträgers (4) samt Stückgut (2) durch die Ladevorrichtung (6) in einem Ablagebereich (26), wobei der Ablagebereich (26) mit dem Entladebereich (10) übereinstimmen kann aber nicht muss.

8. Entladesystem (1) zum Entladen von mit Stückgütern (2) beladenen einheitlichen Ladungsträgern, insbesondere von mit Gepäckstücken (2) beladenen Gepäckwannen (4), umfassend eine Ladevorrichtung (6) und eine Rutsche (16), wobei
- die Stückgüter (2) ein zugordnetes Sortierkriterium aufweisen, die Ladungsträger (4) eindeutig identifizierbar und mit einem Sortierkriterium assoziierbar sind;
- die Ladevorrichtung (6) ausgestaltet ist zum Aufnehmen und Ablegen des Ladungsträgers (4) mit und ohne Stückgut (2);
- die Ladevorrichtung (6) ausgestaltet ist zum Bewegen des Ladungsträgers (4) durch die Ladevorrichtung (6) hin zu einem oberhalb einer durch das Sortierkriterium bestimmten Zielposition (8) angeordneten Entladebereich (10);
- die Ladevorrichtung (6) ausgestaltet ist, zum Neigen des durch die Ladevorrichtung (6) gehaltenen Ladungsträgers (4) um eine Neigungsachse (12) bis hin zu einem Neigungswinkel (14), wobei der Neigungswinkel (14) derart gewählt ist, dass das Stückgut (2) aus der Ladevorrichtung (6) hin zur Zielposition (8) gleitet;
- die Rutsche (16) in demselben oder einem ähnlichen Neigungswinkel (14) angeordnet zwischen dem Ladungsträger (4) und der Zielposition (8) und oberhalb der Zielposition (8) angeordnet ist und eine Rutschoberfläche aufweist, die zum Gleiten des Stückguts (2) hin zur Zielposition (8) ausgestaltet ist.

9. Entladesystem (1) nach Anspruch 8, **dadurch gekennzeichnet, dass**
die Ladevorrichtung (6) ausgestaltet ist zum Bewegen, insbesondere zum abrupten Bewegen, des Ladungsträgers (4) mit einer Bewegungskomponente (20) entgegen der Rutschrichtung (18) .

10. Entladesystem (1) nach einem der Ansprüche 8 bis 9, **dadurch gekennzeichnet, dass**
die Ladevorrichtung (6) ausgestaltet ist zum Rütteln des Ladungsträgers (4), um ein Gleiten des Stückguts (2) aus der Ladevorrichtung (6) zu initiieren.

11. Entladesystem (1) nach einem der Ansprüche 8 bis 10, zudem umfassend
einen Förderer (22), wobei sich die Zielposition (8) auf dem Förderer (22) befindet, und der Förderer (22) ausgestaltet ist, das Stückgut (2) mit einer Bewegungskomponente (24) quer zur Rutschrichtung (18) zu transportieren.

12. Entladesystem (1) nach einem der Ansprüche 8 bis 11, **dadurch gekennzeichnet, dass**
die gesamte und/oder nur ein Teil der Ladevorrichtung (6) zum Bewegen entlang dem Förderer (22) ausgestaltet ist, während ein Gleiten des Stückguts (2) aus dem Ladungsträger (4) initiiert wird.

13. Entladesystem (1) nach einem der Ansprüche 8 bis 12, zudem umfassend
eine Detektionseinheit (28) und eine Steuerung, wobei die Detektionseinheit (28) ausgestaltet ist zum Detektieren einer Position eines weiteren Gegenstandes, insbesondere eines weiteren Stückguts (2), auf dem Förderer (22), und die Steuerung ausgestaltet ist zum Auswählen der Zielposition (8) in Abhängigkeit von der detektierten Position.

14. Entladesystem (1) nach einem der Ansprüche 8 bis 13, **dadurch gekennzeichnet, dass**
die Ladevorrichtung (6) ausgestaltet ist zum Ablegen des Ladungsträgers (4) samt Stückgut (2) an eine Ablageposition (30) in einem Ablagebereich, wobei der Ablagebereich (26) mit dem Entladebereich (10) übereinstimmen kann aber nicht muss.

15. Entladesystem (1) nach Anspruch 14, **dadurch gekennzeichnet, dass**
die Ablageposition ein Regalfach eines Regal (32) ist, wobei das Regal durch ein fahrerloses Transportfahrzeug aus dem Ablagebereich (26) in einen Speicherbereich (30) verschiebbar ist.
